# EUROPÄISCHE PATENTANMELDUNG

(11) **EP 4 349 883 A1**
(43) Veröffentlichungstag der Anmeldung: **10.04.2024**
(21) Anmeldenummer: 23190749.4
(22) Anmeldetag: 10.08.2023
(51) Int. Cl.: C08G 77/18, C08G 77/06, C08K 5/057

(54) **HERSTELLUNG VON ALKOXYSILOXANEN**

(30) Priorität: 12.08.2022 EP 22190106
(71) Anmelder: Evonik Operations GmbH, 45128 Essen (DE)
(72) Erfinder: Knott, Wilfried, 45355 Essen (DE); Dudzik, Horst, 45326 Essen (DE); Henning, Frauke, 45259 Essen (DE)
(74) Vertreter: Evonik Patent Association

(57) **Zusammenfassung**

Verfahren zur Herstellung von einem oder mehreren Alkoxysiloxanen durch Umsetzung von mindestens einem Siloxangrundkörper mit mindestens einem Alkalimetallalkoholat, wobei man in einem ersten Schritt mindestens einen Siloxangrundkörper unter Durchmischung mit mindestens einem Alkalimetallalkoholat, gegebenenfalls unter Zusatz von Siliziumdioxid, unter Wärmeeintrag umsetzt, und zwar ohne Zugabe von Alkohol und ohne Entfernung von etwaig auftretendem Wasser aus der Reaktionsmischung, und die aus dem ersten Schritt hervorgehende Reaktionsmischung in einem zweiten Schritt durch Hinzufügen von mindestens einer Brönstedtsäure und gegebenenfalls unter Hinzufügen von mindestens einem Solvens neutralisiert, vorzugsweise feste Bestandteile abtrennt, und danach das oder die Alkoxysiloxane durch thermisches Abtrennen flüchtiger Verbindungen isoliert, wobei der mindestens eine Siloxangrundkörper ausgewählt ist aus der Gruppe bestehend aus Hexamethylcyclotrisiloxan (D₃), Octamethylcyclotetrasiloxan (D₄), Dekamethylcyclopentasiloxan (D₅), Dodekamethylcyclohexasiloxan (D₆), Mischungen zyklischerverzweigter Siloxane vom D/T-Typ, Silikonöle vorzugsweise umfassend mindestens 100 D-Einheiten, Polydimethylsiloxandiole und α,ω-Divinytsitoxane.

## Beschreibung

Die Erfindung liegt auf dem Gebiet der Silikone. Sie betrifft insbesondere ein Verfahren zur Herstellung von einem oder mehreren Alkoxysiloxanen durch die Umsetzung von mindestens einem Siloxangrundkörper mit mindestens einem Alkalimetallalkoholat, gegebenenfalls unter Zusatz von Siliziumdioxid. Weiterhin betrifft sie Alkoxysiloxane, erhältlich nach einem solchen Verfahren sowie die Verwendung von solchen Alkoxysiloxanen.

Alkoxysiloxane sind Siloxane, welche eine oder mehrere, vorzugsweise zwei, Alkoxygruppen aufweisen. Lineare α,ω-Dialkoxysiloxane sind besonders bevorzugte Alkoxysiloxane im Sinne dieser Erfindung, ganz besonders bevorzugt sind lineare α,ω -Dialkoxypolydimethylsiloxane.

Methoden zur Herstellung von Alkoxysiloxanen sind bekannt. Insbesondere sind vielfältige Methoden referiert, die die Substitution von am Silizium gebundenen, reaktiven Gruppen durch Alkoxyreste beschreiben. Diese zum Teil sehr alten Synthesewege bedienen sich im Wesentlichen des Austausches von Chlor beziehungsweise auch Wasserstoffs (dehydrogenative Route) und es sei auf W. Noll, Chemie und Technologie der Silicone, Verlag Chemie GmbH, Weinheim, (1960), S. 60-61 als eine die präparativen Optionen beleuchtende Referenz verwiesen, in der die Umwandlung reaktiver, dort allerdings am silanischen Silizium gebundener Gruppen in Alkoxysilane diskutiert wird.

Eine deutlich geringere Anzahl an Arbeiten beschäftigt sich hingegen mit dem Zugang zu Alkoxysiloxanen ausgehend von nichtfunktionellen Siloxanen.

Bailey et al. beanspruchen mit der US 2.881.199 die Herstellung alkoxygruppentragender Silane sowie auch alkoxygruppentragender Di- und Trisiloxane durch säurekatalysierte Umsetzung von zyklischen Siloxanen mit Alkoholen unter Rückflussbedingungen und unter kontinuierlicher, azeotroper Entfernung des bei der Reaktion gebildeten Wassers. Bedingt durch die saure Reaktionsführung gewärtigen die Autoren bei den sehr langsam verlaufenden Umsetzungen (24 Stunden) zudem eine unerwünschte Veretherungsreaktion des eingesetzten Alkohols.

Gleichfalls säurekatalysiert setzen Zhurkina et al. (Zh. Obshch. Khim. 1989, 59, 1203-1204) Ethylorthoameisensäureester mit Octamethylcyclotetrasiloxan unter milden Bedingungen (16-20°C) zu einer Diethoxyoctamethyltetrasiloxan enthaltenden Reaktionsmischung um und isolieren dieses Siloxan durch anschließende Vakuumdestillation. Inwieweit der Einsatz von Ethylortho-ameisensäureester als exotischem Wasserabfangreagenz akzeptable Ausbeuten gestattet, ist nicht referiert, jedoch der Hinweis gegeben, dass Ameisensäureethylester unter diesen Bedingungen nicht reagiert.

Auch basisch katalysierte Siloxanumlagerungen sind bekannt.

So richtet sich die Lehre der US 3,477,988 auf die basisch katalysierte Umlagerung von Siloxanen in Gegenwart von Organophosphorverbindungen wie insbesondere Hexamethylphosphorsäuretriamid und schließt dabei sogar die Nutzbarmachung höhermolekularer Hydrolysate, Gummis und Kautschuke mit ein. Die Notwendigkeit, aprotisch-polare Lösungsmittel wie das krebserzeugende Hexamethylphosphorsäuretriamid einsetzen zu müssen, steht einer technischen Verwendung der Lehre entgegen.

Chang et al. (J. Polym. Res. 2005, 12, 433-438) haben sich der nukleophilen Spaltung quervernetzter Polysiloxane zu Gewinnung zyklischer Siloxanmonomere gewidmet, wobei sie zunächst ein vernetztes, gefülltes Polydimethylsiloxan wahlweise in der jeweils 4 bis 5fachen Menge an Tetrahydrofuran, Toluol oder Diethylamin bei Raumtemperatur über Nacht quellen ließen und die so gequollenen Proben danach mit separat vorbereiteten, homogenen Lösungen von Kaliumhydroxid in Dimethylamin beaufschlagt und unter Rühren bei Raumtemperatur gelöst haben. In Zeiträumen von 0,4 bis 4 Stunden beobachteten die Autoren komplette Auflösung der Silikongummibestandteile.Die nach 25 Stunden Reaktionszeit bestimmten Ausbeuten an zyklischen Produkten lagen im Bereich von 10 Gew.-% bis 77 Gew.-%., wobei die Ausbeute des in Diethylamin durchgeführten Auflösungsexperiments die Ausbeuten übertraf, die für die in Tetrahydrofuran, Tetrahydrofuran/Toluol und Toluol gefahrenen Versuche bestimmt wurden.

Wang und Lin widmen sich in K' o Hsueh Tung Pao, 1959, 3, 92-93 dem Abbau von Polyorganosiloxanen durch Butanolyse, wobei sie Natriumhydroxid als Spaltreagenz verwenden und ein Butanol-Wasser-Azeotrop kontinuierlich aus dem Reaktionssystem auskreisen. Das Dilemma einer in effektiver Konkurrenz zur Alkoxyfunktionalierung verlaufenden, alkalisch induzierten Polymerisation, die - weil sie ungeregelt - sowohl kurze als auch langkettige Spaltprodukte hervorbringt, können die Autoren nicht auflösen.

Vornokov und Shabarova beschreiben in Zh. Obshch. Khim.1959,29,1528-1534 (Russian Journal of General Chemistry 1959, 29, 1528-1534) die Herstellung von Organoalkoxysilanen durch Spaltung von Organosiloxanen mit C₄- bis C₁₂-Alkoholen unter basischen Bedingungen, wobei Alkalimetallhydroxide, Alkalimetallalkoholate oder die Alkalimetalle selbst zum Einsatz gelangen.

Die Autoren interpretieren die Reaktion des Organosiloxans mit Alkohol als eine Gleichgewichtreaktion, bei der es darauf ankommt, Reaktionswasser azeotrop oder unter Zuhilfenahme eines inerten, wasserunlöslichen Lösungsmittels oder aber präferiert unter Hinzufügung von Kieselsäureestern (Tetraalkoxysilanen) als wasserentziehende Mittel aus dem Reaktionssystem zu entfernen. Ohne Nutzung wasserentziehender Reagenzien ist hiernach weder die Herstellung von Alkoxysilanen möglich, die sich von Alkoholen mit Siedepunkten kleiner 90°C herleiten, noch das Erzielen hoher Ausbeuten an Alkoxysilanen.

Für die Herstellung von Alkoxysiloxanen weist die Publikation hingegen keinen Lösungsweg auf, denn für den Fachmann verständlich würde insbesondere der Verbleib hochsiedender Tetraalkoxysilane (zum Beispiel Tetraethoxysilan Kp. 168°C) sowie der daraus entstehenden Kondensationsprodukte einen erheblichen Trenn- und Reinigungsaufwand nach sich ziehen.

Petrus et al. beschäftigen sich mit der solvothermalen Alkoholyse von quervernetzten Silikonkautschukabfällen (Macromolecules 2021, 54, 2449-2465) und beschreiben unter anderem die Auflösung geschredderten Silikongummis im Hochdruckreaktor mit Hilfe von n-Octanol im Temperaturbereich zwischen 180°C und 240°C und bei Reaktionszeiten zwischen 16 und 18 Stunden.

Die Umsätze der Reaktion sind im Bereich von 22% bis 80% angegeben und die Analytik weist aus, dass Alkoxyoligosiloxane enstanden sind. Zur Interpretation des zunächst überraschenden Befundes, dass ein vernetztes Siloxan scheinbar unkatalysiert einer Alkoholyse zugänglich ist, nehmen Petrus et al. an, dass die hohen Aufschlusstemperaturen oberhalb von 200°C in Kombination mit Feuchtigkeit Säurespuren aus dem peroxidisch vernetzten Silikonkautschuk freisetzen, die dann die Spaltung der Si-O-Si-Bindungen katalysieren.

Der Zielsetzung verschrieben, die besagte Alkoholysereaktion effektiver, das heißt, bei verkürzten Reaktionszeiten, erniedrigten Temperaturen und zudem bei geringer Katalysatorbeladung durchzuführen, setzten Petrus et al. (ibid.) Alkalimetallaryloxide gestützt durch den Methylsalicylatoliganden, sowie Magnesium- und Zinkaryloxide sowie gemischte Metallaryloxide mit Methylsalicylatoliganden als Katalysatoren ein. Als bester Komplex bei dieser Untersuchung erwies sich das Magnesium-Natrium-Kalium-Aryloxid [Mg₂M'₂ (MesalO)₆(THF)₄] mit M' = Na, K und MesalO als dem Methylsalicylato-Liganden, mit dem die Herstellung von Dioctanoxydimethylsilan und 1,3-Dioctanoxy-1,1,3,3-tetramethyldisiloxan in Ausbeuten von 79% bzw. 17% binnen 2 Stunden bei 220°C Reaktionstemperatur gelingt.

Des Weiteren beschreiben Okamoto et al. in Appl.Catalysis A: General 261 (2004), 239 -245 die Depolymerisation von Polysiloxanen und von mit SiOz-gefüllten Silikongummi mit Dimethylcarbonat und Methanol zu Methoxytrimethylsilan und Dimethoxydimethylsilan unter Freisetzung von Kohlendioxid, wobei als Katalysatoren neben Alkalimetallhalogeniden auch Kaliumhydroxid und Natriummethylat zum Einsatz kommen. Zur Durchführung wird ein Autoklav benötigt, da man die Depolymerisation bei 180°C über einen Zeitraum von 15 Stunden durchführt. Der alleinige Einsatz sowohl von Methanol als auch von Dimethylcarbonat lässt die Depolymerisation nur zu 2 bzw. 3 Prozent stattfinden. Die Autoren schlussfolgern aus ihren Versuchen, dass sowohl Dimethylcarbonat als auch Methanol zugegen sein müssen, um Polysiloxane zu depolymerisieren. Die Anforderung sowohl eine druckfeste Apparatur als auch ein komplexes Aufschlusssystem sowie darüber hinaus noch lange Reaktionszeiten bei hoher Temperatur zu benötigen, machen diese Route für eine technische Umsetzung unattraktiv.

In Sicht aller dieser Anstrengungen definiert sich die zu lösende technische Aufgabe dadurch, einen praktikablen, dabei vorzugweise wenig zeitintensiven und möglichst einfachen synthetischen Zugang zu Alkoxysiloxanen ausgehend von Siloxangrundkörpern zu finden, der auf komplexe Stoffsysteme wie insbesondere mehrkomponentige Lösungsmittelgemische sowie auf exotische Katalysatoren und möglichst auch auf Spezialapparaturen, verzichten kann.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Unter Siloxangrundkörpern im Sinne der Erfindung werden insbesondere solche Siloxane verstanden, die überwiegend aus D-Einheiten aufgebaut sind, vorzugsweise zum Beispiel Siloxanzyklen wie Hexamethylcyclotrisiloxan (D₃), Octamethylcyclotetrasiloxan (D₄), Dekamethylcyclopentasiloxan (D₅), Dodekamethylcyclohexasiloxan (D₆) und/oder beliebige Mischungen derselben.

Ebenfalls werden unter dem Begriff der Siloxangrundkörper im Sinne vorliegender Erfindung insbesondere auch Mischungen zyklischer-verzweigter Siloxane vom D/T-Typ, vorzugsweise hergestellt wie in der EP 3321304 A1, der EP 3401353 A1 oder der EP 3467006 A1 beschrieben, verstanden, die vorzugsweise im Gemisch mit Siloxanzyklen, wie z.B. Octamethylcyclotetrasiloxan (D₄), Dekamethylcyclopentasiloxan (D₅) und/oder Dodekamethylcyclohexasiloxan (D₆) nach erfindungsgemäßer Verarbeitung verzweigte Alkoxygruppen tragende Siloxane hervorbringen können.

Zyklisch-verzweigte Siloxane vom D/T-Typ sind zyklische Siloxane, die aus D- und T-Einheiten aufgebaut sind. Mischungen zyklischer-verzweigter Siloxane vom D/T-Typ sind demnach Gemische zyklischer Siloxane, welche aus D- und T-Einheiten aufgebaut sind.

EP 3401353 A1 beschreibt Mischungen zyklischer-verzweigter, D- und T-Einheiten aufweisender Siloxane und ein Verfahren zu deren Herstellung, umfassend (a) eine sauer katalysierte Äquilibrierung von Trialkoxysilanen mit Siloxancyclen und/oder α,ω- Dihydroxy-polydimethylsiloxan in Anwesenheit von mindestens einem sauren Katalysator und danach (b) eine durch Wasserzugabe eingeleitete Hydrolyse- und Kondensationsreaktion sowie Zugabe eines Siliciumhaltigen Lösemittels, gefolgt von, (c) einer destillativen Abtrennung des freigesetzten Alkohols, im System vorhandenen Wassers und Silicumhaltigen Lösemittels sowie einer Neutralisation oder Abtrennung des sauren Katalysators und ggf. Abtrennung womöglich gebildeter Salze, wobei das Silicium-haltige Lösungsmittel vorzugsweise die isomeren Siloxancyclen Oktamethylcyclotetrasiloxan (D4), Dekamethylcyclotetrasiloxan (D5) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird.

EP 3 321 304 A1 beschreibt Mischungen zyklischer-verzweigter, D- und T-Einheiten aufweisender Siloxane und ein Verfahren zu deren Herstellung, wobei ein Trialkoxysilan in einem Lösemittel mit Siloxancyclen und/oder α,ω-Dihydroxy-polydimethylsiloxan unter Zugabe von Wasser und in Anwesenheit von mindestens einem sauren Katalysator umgesetzt wird.

EP 3 467 006 A1 beschreibt Mischungen zyklischer-verzweigter, D- und T-Einheiten aufweisende Siloxane und ein Verfahren zu deren Herstellung umfassend
(a) eine sauer katalysierte Äquilibrierung von Trialkoxysilanen mit Siloxancyclen und/oder α,ω-Dihydroxy-polydimethylsiloxan in Anwesenheit von mindestens einem sauren Katalysator und danach
(b) eine durch Wasserzugabe eingeleitete Hydrolyse- und Kondensationsreaktion gefolgt von der Zugabe eines Silicium-haltigen Lösemittels,
(c) mit einer anschließenden destillativen Abtrennung des freigesetzten Alkohols und Anteilen des im System vorhandenen Wassers,
(d) mit anschließender Zugabe von Toluol und Auskreisen restlichen im Stoffsystem verbliebenen Wassers,
(e) gefolgt von einer Neutralisation oder Abtrennung des sauren Katalysators und gegebenenfalls Abtrennung womöglich gebildeter Salze,
(f) mit abschließender destillativer Entfernung noch im System vorhandenen Toluols, wobei das Silicium-haltige Lösungsmittel vorzugsweise die isomeren Siloxancyclen Oktamethylcyclotetrasiloxan (D₄), Dekamethylcyclopentasiloxan (D₅) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird.

Ebenfalls werden unter dem Begriff der Siloxangrundkörper im Sinne vorliegender Erfindung insbesondere auch Silikonöle vorzugsweise umfassend mindestens 100 D-Einheiten, Polydimethylsiloxandiole und α,ω-Divinylsiloxane verstanden, wobei der Einsatz von Silikonölen oder α,ω-Divinylsiloxanen weniger bevorzugt ist, da sie - in Abhängigkeit von ihrer jeweiligen mittleren Kettenlänge - einen Anteil an Trimethylsilylgruppen respektive Vinyldimethylsilylgruppen in das Reaktionssystem eintragen können.

Erstaunlicherweise wurde nun gefunden, dass die beschriebene Aufgabe zur Herstellung von Alkoxysiloxanen durch den Gegenstand der Erfindung gelöst wird.

Der Gegenstand der Erfindung ist ein Verfahren zur Herstellung von einem oder mehreren Alkoxysiloxanen durch Umsetzung von mindestens einem Siloxangrundkörper mit mindestens einem Alkalimetallalkoholat, wobei man
(a) in einem ersten Schritt mindestens einen Siloxangrundkörper unter Durchmischung mit mindestens einem Alkalimetallalkoholat, gegebenenfalls unter Zusatz von Siliziumdioxid, unter Wärmeeintrag umsetzt, und zwar ohne Zugabe von Alkohol und ohne Entfernung von etwaig auftretendem Wasser aus der Reaktionsmischung, und
(b) die aus Schritt (a) hervorgehende Reaktionsmischung in einem zweiten Schritt durch Hinzufügen von mindestens einer Brönstedtsäure und gegebenenfalls unter Hinzufügen von mindestens einem Solvens neutralisiert, vorzugsweise feste Bestandteile abtrennt, und
(c) danach das oder die Alkoxysiloxane durch thermisches Abtrennen flüchtiger Verbindungen isoliert,
wobei der mindestens eine Siloxangrundkörper ausgewählt ist aus der Gruppe bestehend aus Hexamethylcyclotrisiloxan (D₃), Octamethylcyclotetrasiloxan (D₄), Dekamethylcyclopentasiloxan (D₅), Dodekamethylcyclohexasiloxan (D₆), Mischungen zyklischer-verzweigter Siloxane vom D/T-Typ, Silikonöle (vorzugsweise solche Silikonöle, die mindestens 100 D-Einheiten aufweisen), Polydimethylsiloxandiole und α,ω-Divinylsiloxane.

Erfindungsgemäß wird mindestens ein Siloxangrundkörper eingesetzt, d.h. es können ein oder mehrere der im Anspruch 1 genannten Siloxangrundkörper eingesetzt werden. So können also auch beliebige Mischungen der zuvor genannten Siloxangrundkörper eingesetzt werden.

Der Befund, dass es sowohl unter Verzicht auf Dimethylcarbonat und Methanol gelingt, zum Beispiel Dekamethylcyclopentasiloxan durch die Einwirkung festen Kaliummethanolats bei 120°C Umsetzungstemperatur im Verlauf von nur 4 Stunden in ein lineares α,ω-Dimethoxypolydimethylsiloxan umzuwandeln, ist vollkommen überraschend und in Sicht von Okamotos Befunden überhaupt nicht vorhersehbar. Okamoto belegt nicht nur die Notwendigkeit, ein stofflich komplexes Depolymerisationssystem einsetzen zu müssen, er lehrt auch, dass die Depolymerisationsgeschwindigkeit nicht vom Katalysator abhängt und schließt daraus, dass der Katalysator selbst nicht im geschwindigkeitsbestimmenden Schritt involviert ist.

Während in der Publikation von Okamoto et al. dem neben anderen Salzen dort auch eingesetzten Natriummethylat die Rolle eines eingeschränkt wirksamen Katalysators beigemessen wird, scheint im hier vorliegenden erfindungsgemäßen Verfahren das Alkalimetallalkoholat das Schlüsselreagenz zu sein, mit dem die Alkoxymodifizierung erfolgt.

Erstaunlicherweise und damit auch in vollkommener Abkehr von Vornokovs Lehre (s.o.), benötigt das erfindungsgemäße Verfahren zur Herstellung von Alkoxysiloxanen auch keinerlei wasserinkompatible Lösungsmittel als Azeotropbildner oder gar wasserentziehende Substanzen wie zum Beispiel Kieselsäureester (Tetraalkoxysilane). Die erfindungsgemäße Umsetzung im ersten Schritt (a) erfolgt ohne Entfernung von etwaig auftretendem Wasser aus der Reaktionsmischung und ohne Zugabe von Alkohol.

Vorzugsweise kann daher die Umsetzung in Schritt (a) ohne den Einsatz von mit Wasser Azeotrope bildenden Lösungsmitteln und/ oder ohne die Verwendung wasserbindender Kieselsäureester, insbesondere ohne Einsatz von Tetraalkoxysilanen, vorgenommen werden, was einer bevorzugten Ausführungsform der Erfindung entspricht.

Insbesondere kann die die Umsetzung in Schritt (a) lösungsmittelfrei durchgeführt werden, was ebenfalls einer bevorzugten Ausführungsform der Erfindung entspricht.

Im ersten Schritt (a) der vorliegenden Erfindung werden der oder die Siloxangrundkörper mit mindestens einem Alkalimetallalkoholat umgesetzt.

Die Erfinder haben in zahlreichen Experimenten gefunden, dass den Methanolaten (M⁺OCH₃⁻) des Kaliums und des Natriums unter den erfindungsgemäß einsetzbaren Alkalimetallalkoholaten insofern eine besonders bevorzugte Stellung zukommt, da sie bei Reaktion mit Siloxangrundkörpern wie zum Beispiel mit Dekamethylcyclopentasiloxan sogar selektiv zu linearen Alkoxysiloxanen reagieren, deren zugehörige ²⁹Si-NMR-Spektren keine =SiOH-Signale aufweisen. Der Einsatz von Kalium-und/oder Natriummethanolat ist daher ganz besonders bevorzugt. Er entspricht einer bevorzugten Ausführungsform der Erfindung.

Setzt man hingegen z.B. Kalium- oder Natriumethanolat mit Dekamethylcyclopentasiloxan um, so sieht man in den ²⁹Si-NMR-Spektren der erhaltenen Produkte benachbart neben den ≡SiOC₂H₅-Signalen ausgeprägte ≡SiOH-Signale (Beispiel 2).

Es wurde überraschenderweise weiterhin gefunden, dass man durch die Zugabe pulverförmigen Siliziumdioxids (wie insbesondere pyrogenes Siliziumdioxid, z.B. bekannt als Aerosil^{®} oder aber gefälltes Siliciumdioxid), welche bevorzugt ist, zu diesen eben genannten Ethanolatsystemen im ersten Schritt (a) die Selektivität so verbessern kann, dass nur noch ≡SiOC₂H₅-Signale im ²⁹Si-NMR-Spektrum beobachtet werden (Beispiel 3).

Die Erfinder haben beobachtet, dass der Zusatz anderer pulverförmiger Silikate hingegen keine positive Wirkung auf diese Selektivität ausübt (siehe z.B. Perlit-Zusatz, Beispiel 4).

Verblüffend ist die Beobachtung, dass die Zugabe eines pulverförmigen Siliziumdioxids (z.B. Aerosil^{®}, Beispiel 3) zu den Ethanolatsystemen die Selektivität so verbessern kann, dass nur noch ≡SiOC₂H₅-Signale und keine ≡SiOH-Signale im ²⁹Si-NMR-Spektrum beobachtet werden.

Unter pulverförmigem Siliziumdioxid werden im Rahmen dieser Erfindung insbesondere die synthetisch erzeugten pulverförmigen Siliziumdioxide (sogenanntes gefälltes Siliciumdioxid) und die pyrogenen Siliziumdioxide verstanden. Diese dem Fachmann bekannten Siliziumdioxide sind pulverförmig.

Es entspricht daher einer bevorzugten Ausführungsform der Erfindung, wenn in dem erfindungsgemäßen Verfahren die Umsetzung in dem ersten Schritt (a) unter Einsatz von pulverförmigen Siliziumdioxid erfolgt, vorzugsweise unter Einsatz von pyrogenem Siliziumdioxid und/ oder gefälltem Siliciumdioxid.

Wie aus dem zuvor gesagten ersichtlich ist, sind mit Blick auf den ersten Verfahrensschritt (a) die folgenden beiden besonders bevorzugten Ausführungsformen (i) und (ii) ganz besonders vorteilhaft: nämlich wenn in dem ersten Schritt (a) der oder die Siloxangrundkörper unter Durchmischung mit Kalium- und/oder Natriummethanolat unter Wärmeeintrag umgesetzt wird, entsprechend der besonders bevorzugten Ausführungsform (i), oder wenn in dem Schritt (a) der oder die Siloxangrundkörper unter Durchmischung mit Kalium- und/oder Natriumethanolat unter Einsatz von pulverförmigen Siliziumdioxid und unter Wärmeeintrag umgesetzt wird, entsprechend der besonders bevorzugten Ausführungsform (ii).

Bevorzugt einsetzbare pyrogene Siliziumdioxide weisen spezifische Oberflächen von 50 bis 600 m²/g auf. Bevorzugt einsetzbares, gefälltes Siliziumdioxid weist spezifische Oberflächen von 20 bis 800 m²/g auf. Die spezifische Oberfläche ausgedrückt als BET-Oberflache wird dabei mittels Stickstoff (0-BET-N₂) bei der Siede-Temperatur des flüssigen Stickstoffs gemessen, bevorzugt gemäß ISO 9277:2010-09, "Determination of the specific surface area of solids by gas adsorption - BET method".

Unter Alkalimetallalkoholat werden im Rahmen dieser Erfindung vorzugsweise Verbindungen der allgemeinen Formel:

[M⁺][OR⁻]

verstanden, wobei
- M: ausgewählt ist aus der Reihe der Alkalimetalle Li, Na oder K, bevorzugt Na oder K und
- R: einen linearen, verzweigten oder zyklischen Alkylrest, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen darstellt. Erfindungsgemäß wird mindestens ein Alkalimetallalkoholat eingesetzt. Es können also ein oder mehrere Alkalimetallalkoholate eingesetzt werden. Am meisten bevorzugt ist der Einsatz von Kaliumethanolat, Natriumethanolat, Kaliummethanolat und/oder Natriummethanolat.

Zu den bekannten Verfahren der Herstellung von Alkoholaten gehört die Chloralkali-Elektrolyse nach dem Amalgam-Verfahren, bei der Natriumamalgam mit Alkohol umgesetzt wird [vgl. z. B. Chemical and Engineering News 22, 1903-06 (1944)].

Eine weitere bekannte Methode ist die Herstellung von Alkoholaten aus einem Alkalimetall und einem Alkohol bzw. aus einem Alkalihydroxid und einem Alkohol. Die Alkoholatproduktion aus einem Alkalimetall und einem tertiären Alkohol ist z. B. aus DE-23 33 634 (Dynamit Nobel) oder DE 26 12 642 (Degussa) bekannt. Die Herstellung eines Alkoholats aus einem Alkalihydroxid und einem tertiären Alkohol ist ebenfalls bekannt. Die erste Verfahrensvariante erfordert den Einsatz von teurem Alkalimetall, und bei der zweiten Variante ausgehend vom Alkalihydroxid muss das bei der Umsetzung entstehende Wasser destillativ entfernt werden, was den entsprechenden hohen thermischen Aufwand erfordert.

Der Lehre der DE-A-33 46 131 folgend, werden Alkalialkoholate elektrolytisch aus Salzen hergestellt, wobei eine Elektrolysezelle, bei der eine Kationenaustauschmembran die Elektrodenräume trennt, eingesetzt wird. In DE-42 33 191.9-43 wird ein Verfahren beschrieben, dass die Herstellung eines Alkalialkoholats aus einem Salz durch Elektrodialyse ermöglicht.

Ebenfalls sind Verfahren zur Herstellung von Sonderalkoholaten, wie zum Beispiel den Alkoholaten höherer und/oder mehrwertiger Alkohole vereinzelt beschrieben. Alkoholate höherer und/oder mehrwertiger Alkohole lassen sich bekanntlich grundsätzlich durch Umalkoholisieren, d. h., durch Substitution des Alkoholatrestes niederer Alkoholate ROM durch Umsetzung mit höheren Alkoholen R'OH (wobei R und R' Alkylreste unterschiedlicher Kohlenstoffkettenlänge sind und M ein Metallkation bezeichnet) in einem flüssigen Reaktionsgemisch bei geeigneten Temperatur - und Druckverhältnissen herstellen. Diese den Alkoholatrest substituierende Umsetzung wird im Laborjargon auch als "Umkochen" bezeichnet. Die Lage des Gleichgewichts ROM + R'OH ⇔ ROH + R'OM hängt von der Acidität der beiden Alkohole ab, die in der Reihenfolge Methanol > primäre > sekundäre > tertiäre Alkohole abnimmt [R. T. Mclver und J. A. Scott, J. American Chem. Soc. 96 (1973) 2706]. Daher soll die Herstellung der Alkoholate sekundärer Alkohole auf diesem Wege nur in Ausnahmefällen möglich sein und die Herstellung der Alkoholate tertiärer Alkohole durch Umalkoholisierung gar nicht gelingen ["Methoden der Organischen Chemie" (1963) Bd. 6/2, S. 13]. Jedoch wurde die Herstellung von Alkoholaten durch Umkochen in DE-1 254 612 und in DE-27 26 491 (beide von Dynamit Nobel) auch für höhere Alkohole beschrieben. GB-1 143 897 (Metallgesellschaft) beschreibt die Umsetzung eines einwertigen Alkalialkoholats mit einem bis zu sechs Hydroxylgruppen enthaltenden C₂- bis C₁₈-Alkohol oder -Phenol, wobei als Lösungsmittel ein Überschuss an einwertigem Alkohol und/oder ein Kohlenwasserstoff eingesetzt wird. Das Umkochen führt aber immer zur Bildung des leichtsiedenden Alkohols ROH (z. B. Methanol), der zur Isolierung des gewünschten Alkoholats - gegebenenfalls zusätzlich zum nicht umgesetzten höheren Alkohol R'OH - aus dem Reaktionsproduktgemisch zum Teil mit erheblichem thermischen Aufwand abgetrennt werden muss.

Abseits dieser thermisch geführten Gleichgewichtsverschiebungen lehrt die EP 0776995 B1 ein Verfahren zur Herstellung von Alkoholaten unter dem Einfluss eines elektrischen Feldes, wobei ein Alkohol durch Zufuhr von Metallionen in das gewünschte Alkoholat umgesetzt wird und die Metallionen selbst aus der elektrochemischen Zerlegung eines anderen Alkoholates in dem elektrischen Feld stammen. Die Alkoholatbildung und die -zerlegung erfolgen in räumlich durch lonenaustauschmembranen getrennten Kammern.

Erfindungsgemäß setzt man mindestens einen Siloxangrundkörper mit mindestens einem Alkalimetallalkoholat gegebenenfalls unter Zugabe von pulverförmigem Siliziumdioxid unter Wärmeeintrag und unter Durchmischung des Reaktionsansatzes um. Der Wärmeeintrag kann auf die übliche, dem Fachmann bekannte Weise realisiert werden, im Labormaßstab z.B. durch den Einsatz von sogenannten Heizbädern oder Heizhauben, in größerem Maßstab z.B. durch doppelwandige, beheizbare Reaktoren. Bevorzugte Reaktionstemperaturen sind weiter unten angegeben, sie liegen vorzugsweise im Bereich von 100°C bis 200°C. Die Durchmischung kann ebenfalls auf die übliche, dem Fachmann bekannte Weise realisiert werden, z.B. durch Rühren unter Einsatz üblicher Mischgeräte.

Die aus diesem Reaktionsschritt hervorgehende Reaktionsmischung wird erfindungsgemäß durch Hinzufügen von mindestens einer Brönstedtsäure und gegebenenfalls unter Hinzufügen von mindestens einem Solvens neutralisiert und dann werden feste Bestandteile vorzugsweise abgetrennt, insbesondere abfiltriert, bevor man nach dem thermischen Abtrennen flüchtiger Verbindungen das oder die angestrebten Alkoxysiloxane isoliert.

Das mindestens eine Alkalimetallalkoholat wird vorzugsweise in Gesamt-Mengen von 1 bis 10 mol-%, bevorzugt von 2 bis 7 mol-%, besonders bevorzugt von 3 bis 6 mol-% bezogen auf die Gesamt-Menge des mindestens einen Siloxangrundkörpers eingesetzt. Dies entspricht einer bevorzugten Ausführungsform der Erfindung.

Das optional einsetzbare pulverförmige Siliziumdioxid kann vorzugsweise in Gesamt-Mengen von 1 bis 10 mol-%, bevorzugt von 2 bis 8 mol-%, besonders bevorzugt von 4 bis 7 mol-% bezogen auf die Gesamt-Menge des mindestens einen Siloxangrundkörpers eingesetzt werden. Dies entspricht einer bevorzugten Ausführungsform der Erfindung.

Das erfindungsgemäße Verfahren wird in dem ersten Schritt (a) vorzugsweise im Temperaturbereich von 100°C bis 200°C, bevorzugt im Temperaturbereich von 120°C bis 160°C und über einen Zeitraum von vorzugsweise 1 bis 12 Stunden, bevorzugt über einen Zeitraum von 2 bis 8 Stunden und das jeweils bevorzugt lösemittelfrei durchgeführt. Dies entspricht einer bevorzugten Ausführungsform der Erfindung.

Zeigt sich bei der erfindungsgemäßen Umsetzung des mindestens einen Siloxangrundkörpers mit mindestens einem Alkalimetallalkoholat und gegebenenfalls pulverfömigem Siliziumdioxid unter Normaldruck, das heißt, bei einem auf die Apparatur wirkenden, äußeren Luftdruck von 1.013,25 hPa eine Kondensatbildung, z.B in einem aufgesetzten Rückflusskühler, so ist es bevorzugt und für die erzielbare Ausbeute an Alkoxysiloxan vorteilhaft, die Umsetzung unter Überdruckbedingungen in einem druckfesten Reaktor durchzuführen, was einer bevorzugten Ausführungsform der Erfindung entspricht. Der dabei verzeichnete Druckaufbau ist autogener Natur und geht auf den Dampfdruck der darin involvierten Systemkomponenten zurück. Falls gewünscht, kann der Reaktor optional noch mit einem Inertgaspolster beaufschlagt werden.

Erfindungsgemäß wird die aus der Reaktion mit mindestens einem Alkalimetallalkoholat hervorgehende Reaktionsmischung in einem zweiten Schritt (b) durch Hinzufügen von mindestens einer Brönstedtsäure und gegebenenfalls unter Hinzufügen von mindestens einem Solvens neutralisiert.

Es wird mindestens eine Brönstedtsäure eingesetzt, d.h. es können eine oder mehrere Brönstedtsäuren eingesetzt werden. Dabei können vorzugsweise eine oder mehrere wasserfreie Mineralsäuren (wie vorzugsweise wasserfreie Schwefelsäure und/oder wasserfreie Perchlorsäure) und/oder eine oder mehrere wasserfreie organische Säuren (wie vorzugsweise wasserfreie Essigsäure) zur Neutralisation eingesetzt werden. Dies entspricht einer bevorzugten Ausführungsform der Erfindung.

Im Falle der Verwendung von vorzugsweise wasserfreien Mineralsäure(n) bemisst man deren Zugabemenge vorzugsweise so, dass stöchiometrische Äquivalenz bezogen auf insgesamt eingesetztes Alkalimetallalkoholat erzielt wird. Bei Verwendung der deutlich schwächeren, wasserfreien organischen Säure(n) (wie z.B. wasserfreie Essigsäure) wählt man vorzugsweise einen deutlichen stöchiometrischen Überschuss an Säure bezogen auf insgesamt eingesetztes Akalimetallakoholat. Dieser wird vorzugsweise bis zum 50%igen Überschuss bemessen.

Die Einsatzmenge der insgesamt eingesetzten Brönstedtsäure wird vorzugsweise also so gewählt, dass sie von der stöchiometrischen Äquivalenz bis zum 50%igen stöchiometrischen Überschuss reicht, jeweils bezogen auf insgesamt eingesetztes Alkalimetalllkoholat.

Falls die aus dem erfindungsgemäßen Neutralisationsschritt absehbare Salzmenge einer leichten Filtration im Wege steht, so ist vorzugsweise der Einsatz von mindestens einem geeigneten Solvens vorzusehen. Es können optional ein oder mehrere Solventien eingesetzt werden. Als optionales Solvens eignen sich bevorzugt solche Lösungsmittel, die selbst mit Blick auf das Reaktionssystem chemisch inert sind und die Verdünnung bzw. Dispersion der Bestandteile der Neutralisationsstufe fördern. Bevorzugt ist das mindestens eine, optionale Solvens ausgewählt aus der Gruppe bestehend aus Alkanen und Alkylaromaten, wobei der Einsatz von Alkylaromaten, wie vorzugsweise Toluol und/oder auch die isomeren Xylole besonders bevorzugt ist.

Dann können die aus der Neutralisationsstufe hervorgehenden festen Bestandteile vorzugsweise abgetrennt, insbesondere abfiltriert werden. Dann werden, insbesondere nach Abfiltrieren der aus der Neutralisationsstufe hervorgehenden festen Bestandteile, die flüchtigen Verbindungen thermisch abgetrennt und das oder die Alkoxysiloxane isoliert.

Mit Hilfe des erfindungsgemäßen Verfahrens gelangt man einfach zu den entsprechenden Alkoxysiloxanen.

Ein weiterer Gegenstand der Erfindung sind demgemäß Alkoxysiloxane, hergestellt gemäß dem erfindungsgemäßen Verfahren.

Ein weiterer Gegenstand der Erfindung liegt in der Verwendung der erfindungsgemäß erhältlichen Alkoxysiloxane als polymerisationsaktive Massen. Bevorzugt ist die Verwendung der erfindungsgemäß erhältlichen Alkoxysiloxane als Kleb - und/oder Dichtstoffe ggf. unter Zusatz von Vernetzungskatalysatoren, ggf. noch in Abmischung mit weiteren vernetzenden Silanen und/oder Siloxanen sowie optional einsetzbaren Füllstoffen und/oder Pigmenten.

Darüber hinaus eignen sich die erfindungsgemäß gewonnen Alkoxysiloxane zum Beispiel auch als Ausgangsmaterialien für die Herstellung von SiOC-verknüpften Polyethersiloxanen durch Umesterung mit Polyetherolen in Gegenwart von Zinkacetylacetonat als Katalysator, wie es z.B. in der Europäischen Patentschrift EP 3438158 (B1) dargelegt wird. Ein weiterer Gegenstand der Erfindung liegt dementprechend in der Verwendung der erfindungsgemäß erhältlichen Alkoxysiloxane zur Herstellung von SiOC-verknüpften Polyethersiloxanen durch Umesterung der Alkoxysiloxane mit Polyetherolen in Gegenwart von Zinkacetylacetonat als Katalysator.

Falls vor der hier beschriebenen Weiterverarbeitung zum Beispiel besondere mittlere Siloxankettenlängen gewünscht sind, können die erfindungsgemäß erhaltenen Alkoxysiloxane optional noch einer vorzugsweise sauer-katalysierten Äquilibrierung unterworfen werden, um die Zielkettenlängen einzustellen.

### Beispiele:

Die folgenden Beispiele dienen dem Fachmann allein zur Erläuterung dieser Erfindung und stellen keinerlei Beschränkung des beanspruchten Gegenstandes dar. Die ²⁹Si-NMR-Spektroskopie diente in allen Beispielen der Reaktionsverfolgung.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard[δ(²⁹Si) = 0,0 ppm] gemessen.

Soweit nicht anders gesagt, sind alle Prozentangaben als Angaben in Gewichtsprozenten zu verstehen.

### Beispiel 1 (erfindungsgemäß)

In einem 500-ml-Vierhalsrundkolben ausgestattet mit KPG-Glasflügelrührer und aufgesetztem Rückflusskühler werden 100 g Dekamethylcyclopentasiloxan (D₅) unter Rühren vorgelegt und mit 5 g pulverförmigem Kaliummethanolat (KOCH₃, Hersteller Evonik Industries) versetzt.

Unter weiterem Rühren lässt man die Mischung bei 120°C über einen Zeitraum von 4 Stunden reagieren. Anschließend kühlt man den Ansatz auf 60°C ab, versetzt mit 6,4 g wasserfreier Essigsäure (50% Überschuss) und rührt für 30 Minuten bei dieser Temperatur. 100 ml Toluol werden hinzugegeben und die Feststoffanteile werden mit Hilfe einer Filterpresse (K 300 Filterscheibe) abgetrennt. Das erhaltene, klare Filtrat wird am Rotationsverdampfer bei 70°C Sumpftemperatur und einem angelegten Hilfsvakuum von < 5mbar von Flüchtigen befreit.

Eine Probe des so gewonnenen, farblosen Rückstands wird mit Hilfe der ²⁹Si-NMR-Spekroskopie untersucht. Die charakteristischen Signallagen des zugehörigen ²⁹Si-NMR-Spektrums belegen, dass ein lineares α,ω Dimethoxypolydimethylsiloxan der mittleren Kettenlänge von ca. 48 entstanden ist. Zudem gibt das Spektrum Hinweis auf eine kleine Menge vorhandener T-Strukturen (Signallagen bei -65 und -67 ppm).

### Beispiel 2 (erfindungsgemäß)

In einem 500-ml-Vierhalsrundkolben ausgestattet mit KPG-Glasflügelrührer und aufgesetztem Rückflusskühler werden 100 g Dekamethylcyclopentasiloxan (D₅) unter Rühren vorgelegt und mit 5 g pulverförmigem Kaliumethanolat (KOC₂H₅, Hersteller Evonik Industries) versetzt.

Unter weiterem Rühren lässt man die Mischung bei 120°C über einen Zeitraum von 4 Stunden reagieren. Anschließend kühlt man den Ansatz auf 60°C ab, versetzt mit 6,4 g wasserfreier Essigsäure (50% Überschuss) und rührt für 30 Minuten bei dieser Temperatur. 100 ml Toluol werden hinzugegeben und die Feststoffanteile werden mit Hilfe einer Filterpresse (K 300 Filterscheibe) abgetrennt. Das erhaltene, klare Filtrat wird am Rotationsverdampfer bei 70°C Sumpftemperatur und einem angelegten Hilfsvakuum von < 5mbar von Flüchtigen befreit.

Eine Probe des so gewonnenen, farblosen Rückstands wird mit Hilfe der ²⁹Si-NMR-Spekroskopie untersucht. Die charakteristischen Signallagen des zugehörigen ²⁹Si-NMR-Spektrums belegen, dass neben einem linearen α,ω-Diethoxypolydimethylsiloxan auch Anteile eines SiOH-Gruppen aufweisenden Siloxans entstanden sind.

### Beispiel 3 (erfindungsgemäß)

In Analogie zu dem in Beispiel 2 beschriebenen Vorgehen werden in einem 500-ml-Vierhalsrundkolben ausgestattet mit KPG-Glasflügelrührer und aufgesetztem Rückflusskühler 100 g D₅ unter Rühren vorgelegt und mit 5 g pulverförmigem Kaliumethanolat (KOC₂H₅, Hersteller Evonik Industries) sowie mit 5 g Aerosil^{®} 200 (Hersteller Evonik Industries) versetzt.

Unter weiterem Rühren lässt man die Mischung bei 120°C über einen Zeitraum von 4 Stunden reagieren. Anschließend kühlt man den Ansatz auf 60°C ab, versetzt mit 6,4 g wasserfreier Essigsäure (50% Überschuss) und rührt für 30 Minuten bei dieser Temperatur. 100 ml Toluol werden hinzugegeben und die Feststoffanteile werden mit Hilfe einer Filterpresse (K 300 Filterscheibe) abgetrennt. Das erhaltene, klare Filtrat wird am Rotationsverdampfer bei 70°C Sumpftemperatur und einem angelegten Hilfsvakuum von < 5mbar von Flüchtigen befreit.

Eine Probe des so gewonnenen, farblosen Rückstands wird mit Hilfe der ²⁹Si-NMR-Spekroskopie untersucht. Die charakteristischen Signallagen des zugehörigen ²⁹Si-NMR-Spektrums belegen, dass ein lineares α,ω-Diethoxypolydimethylsiloxan der mittleren Kettenlänge von ca. 48 entstanden ist. Das Spektrum liefert keinen Hinweis auf die Präsenz von ≡Si-OH-Gruppen.

### Beispiel 4 (erfindungsgemäß)

In Analogie zu dem in Beispiel 3 beschriebenen Vorgehen werden in einem 500-ml-Vierhalsrundkolben ausgestattet mit KPG-Glasflügelrührer und aufgesetztem Rückflusskühler 100 g Dekamethylcyclopentasiloxan (D₅) unter Rühren vorgelegt und mit 5 g pulverförmigem Kaliumethanolat (KOC₂H₅, Hersteller Evonik Industries) sowie mit 5 g Perlite D14 (Knauf) versetzt.

Unter weiterem Rühren lässt man die Mischung bei 120°C über einen Zeitraum von 4 Stunden reagieren. Anschließend kühlt man den Ansatz auf 60°C ab, versetzt mit 6,4 g wasserfreier Essigsäure (50% Überschuss) und rührt für 30 Minuten bei dieser Temperatur. 100 ml Toluol werden hinzugegeben und die Feststoffanteile werden mit Hilfe einer Filterpresse (K 300 Filterscheibe) abgetrennt. Das erhaltene, klare Filtrat wird am Rotationsverdampfer bei 70°C Sumpftemperatur und einem angelegten Hilfsvakuum von < 5mbar von Flüchtigen befreit.

Eine Probe des so gewonnenen, farblosen Rückstands wird mit Hilfe der ²⁹Si-NMR-Spekroskopie untersucht. Die charakteristischen Signallagen des zugehörigen ²⁹Si-NMR-Spektrums belegen, dass neben einem linearen α,ω-Diethoxypolydimethylsiloxan auch Anteile eines SiOH-Gruppen aufweisenden Siloxans entstanden sind.

Im direkten Vergleich mit Beispiel 3 belegt Beispiel 4, dass zwar das Aerosil die Selektivität der Siloxanethoxylierung erhöht, aber dass es keinesfalls ausreicht, ein beliebiges Silikat - in diesem Fall Perlit - hinzuzufügen, um die Selektivität der Siloxanethoxylierung zu verbessern.

## Patentansprüche

1. Verfahren zur Herstellung von einem oder mehreren Alkoxysiloxanen durch Umsetzung von mindestens einem Siloxangrundkörper mit mindestens einem Alkalimetallalkoholat, wobei man
(a) in einem ersten Schritt mindestens einen Siloxangrundkörper unter Durchmischung mit mindestens einem Alkalimetallalkoholat, gegebenenfalls unter Zusatz von Siliziumdioxid, unter Wärmeeintrag umsetzt, und zwar ohne Zugabe von Alkohol und ohne Entfernung von etwaig auftretendem Wasser aus der Reaktionsmischung, und
(b) die aus dem ersten Schritt (a) hervorgehende Reaktionsmischung in einem zweiten Schritt durch Hinzufügen von mindestens einer Brönstedtsäure und gegebenenfalls unter Hinzufügen von mindestens einem Solvens neutralisiert, vorzugsweise feste Bestandteile abtrennt, und
(c) danach das oder die Alkoxysiloxane durch thermisches Abtrennen flüchtiger Verbindungen isoliert,
wobei der mindestens eine Siloxangrundkörper ausgewählt ist aus der Gruppe bestehend aus Hexamethylcyclotrisiloxan (D₃), Octamethylcyclotetrasiloxan (D₄), Dekamethylcyclopentasiloxan (D₅), Dodekamethylcyclohexasiloxan (D₆), Mischungen zyklischer-verzweigter Siloxane vom D/T-Typ, Silikonöle (vorzugsweise solche Silikonöle, die mindestens 100 D-Einheiten aufweisen), Polydimethylsiloxandiole und α,ω-Divinylsiloxane.

2. Verfahren nach Anspruch 1, **dadurch gekennzeichnet, dass** die Umsetzung in dem ersten Schritt (a) ohne den Einsatz von mit Wasser Azeotrope bildenden Lösungsmitteln und/ oder ohne die Verwendung wasserbindender Kieselsäureester, insbesondere ohne Einsatz von Tetraalkoxysilanen, vorgenommen wird.

3. Verfahren nach Anspruch 1 oder 2, **dadurch gekennzeichnet, dass** das mindestens eine Alkalimetallalkoholat der allgemeinen Formel
[M⁺][OR⁻]
entspricht, wobei
M ausgewählt ist aus der Reihe der Alkalimetalle Li, Na oder K, bevorzugt Na oder K und
R einen linearen,verzweigten oder zyklischen Alkylrest, bevorzugt mit 1 bis 10 Kohlenstoffatomen, besonders bevorzugt mit 1 bis 6 Kohlenstoffatomen, ganz besonders bevorzugt mit 1 oder 2 Kohlenstoffatomen darstellt.

4. Verfahren nach einem der Ansprüche 1 bis 3, **dadurch gekennzeichnet, dass** die Umsetzung des mindestens einen Siloxangrundkörpers in dem ersten Schritt (a) mit Kalium- und/oder Natriummethanolat durchgeführt wird.

5. Verfahren nach einem der Ansprüche 1 bis 4, **dadurch gekennzeichnet, dass** die Umsetzung in dem ersten Schritt (a) unter Einsatz von pulverförmigem Siliziumdioxid erfolgt, vorzugsweise unter Einsatz von pyrogenem Siliziumdioxid und/ oder gefälltem Siliciumdioxid.

6. Verfahren nach Anspruch 5, **dadurch gekennzeichnet, dass** die Umsetzung des mindestens einen Siloxangrundkörpers in dem ersten Schritt (a) mit Kalium- und/oder Natriumethanolat durchgeführt wird.

7. Verfahren nach einem der Ansprüche 1 bis 6, **dadurch gekennzeichnet, dass** die Umsetzung in dem ersten Schritt (a) lösungsmittelfrei durchgeführt wird.

8. Verfahren nach einem der Ansprüche 1 bis 7, **dadurch gekennzeichnet, dass** die Umsetzung in dem ersten Schritt (a) im Temperaturbereich von 100°C bis 200°C, bevorzugt im Temperaturbereich von 120°C bis 160°C über einen Zeitraum von 1 bis 12 Stunden, bevorzugt über einen Zeitraum von 2 bis 8 Stunden durchgeführt wird.

9. Verfahren nach einem der Ansprüche 1 bis 8, **dadurch gekennzeichnet, dass** das mindestens eine Alkalimetallalkoholat in einer Gesamt-Menge von 1 bis 10 mol-%, bevorzugt von 2 bis 7 mol-%, besonders bevorzugt von 3 bis 6 mol-% bezogen auf die Gesamt-Menge des mindestens einen Siloxangrundkörpers eingesetzt wird.

10. Verfahren nach einem der Ansprüche 1 bis 9, **dadurch gekennzeichnet, dass** pulverförmiges Siliziumdioxid in einer Gesamt-Menge von 1 bis 10 mol-%, bevorzugt von 2 bis 8 mol-%, besonders bevorzugt von 4 bis 7 mol-% bezogen auf die Gesamt-Menge des mindestens einen Siloxangrundkörpers eingesetzt wird.

11. Verfahren nach einem der Ansprüche 1 bis 10, **dadurch gekennzeichnet, dass** als in dem zweiten Verfahrensschritt (b) hinzugefügte mindestens eine Brönstedtsäure wasserfreie Mineralsäure und/oder wasserfreie organische Säure, insbesondere wasserfreie Schwefelsäure, wasserfreie Perchlorsäure und/oder wasserfreie Essigsäure eingesetzt wird.

12. Verfahren nach einem der Ansprüche 1 bis 11, **dadurch gekennzeichnet, dass** in dem zweiten Verfahrensschritt (b) mindestens ein Solvens hinzugefügt wird, vorzugsweise ausgewählt aus der Gruppe bestehend aus Alkanen und Alkylaromaten.

13. Verfahren nach einem der Ansprüche 1 bis 12, **dadurch gekennzeichnet, dass** es zur Herstellung von α,ω-Dimethoxypolydimethylsiloxan und/oder zur Herstellung von α,ω- Dieethoxypolydimethylsiloxan dient.

14. Alkoxysiloxane, erhältlich nach einem der Ansprüche 1 bis 13.

15. Verwendung von Alkoxysiloxanen gemäß Anspruch 14 als polymerisationsaktive Massen, bevorzugt als Kleb - und/oder Dichtstoffe.

16. Verwendung von Alkoxysiloxanen gemäß Anspruch 14 zur Herstellung von SiOC-verknüpften Polyethersiloxanen durch Umesterung der Alkoxysiloxane mit Polyetherolen in Gegenwart von Zinkacetylacetonat als Katalysator.
